# EUROPÄISCHE PATENTANMELDUNG

(11) **EP 1 650 173 A1**
(43) Veröffentlichungstag der Anmeldung: **26.04.2006**
(21) Anmeldenummer: 04024814.8
(22) Anmeldetag: 19.10.2004
(51) Int. Cl.: C03C 17/36, C03C 17/34, C03C 23/00

(54) **Glasbeschichtung**

(71) Anmelder: Applied Films GmbH & Co. KG, 63755 Alzenau (DE)
(72) Erfinder: Kleideiter, Gerd, 63856 Bessenbach (DE); Zmelty, Anton, 63768 Hösbach (DE); Geisler, Michael, 63607 Wächtersbach (DE)
(74) Vertreter: Schickedanz, Willi

(57) **Zusammenfassung**

Die Erfindung betrifft eine Glasbeschichtung und eine Verfahren zur Herstellung dieser Glasbeschichtung. Die Glasbeschichtung weist eine erste Schicht aus ZnO und eine darauf angeordnete zweite Schicht aus Ag auf. Bevor die Ag-Schicht auf die ZnO-Schicht aufgebracht wird, wird sie mit Ionen bestrahlt.

## Beschreibung

Die Erfindung betrifft eine Glasbeschichtung nach dem Oberbegriff des Patentanspruchs 1.

Beschichtungen von Architekturglas dienen dazu, bestimmte Wellenlängen oder Wellenlängenbereiche des Tageslichtes zu reflektieren oder zu absorbieren, so dass sich das durch die Fenster in einen Raum eintretende Licht von dem Licht außerhalb des Raumes unterscheidet.

Eine wichtige Funktion solcher Beschichtungen besteht darin, Wärmestrahlen zu reflektieren, damit sich der Raum im Sommer nicht zu sehr erwärmt und im Winter nicht zu sehr abkühlt. Die Transmission des sichtbaren Lichts soll hierbei aber nicht wesentlich vermindert werden, d. h. die Beschichtung soll eine hohe Transmission im sichtbaren Bereich und eine hohe Reflektion für Wärme- oder Infrarotstrahlen besitzen.

Schichtsysteme, welche diese Funktion erfüllen, werden Low-E-Schichtsysteme genannt, wobei "E" für "Emissivity" steht.

Es ist bereits ein Low-E-Schichtsystem bekannt, das als Substrat eine Glasscheibe aus Mineralglas aufweist, auf der sich fünf übereinander angeordnete Einzelschichten befinden (DE 42 113 63 A1). Auf diesem Substrat befindet sich eine erste Schicht aus Zn0 mit einer Dicke von 400 Å. Auf dieser ersten Schicht ist eine zweite Schicht aus Ag mit einer Dicke von 90 Å aufgebracht. Eine dritte Schicht, die sich auf der zweiten Schicht befindet, besteht aus einem der Metalle Ti oder NiCr mit einer Dicke von etwa 15 Å. Auf diese dritte Schicht ist eine vierte Schicht aufgebracht, die aus Zn0 besteht und eine Dicke von 320 Å aufweist. Schließlich wird auf die vierte Schicht eine fünfte Schicht aus TiO₂ mit einer Dicke von 70 Å aufgebracht. Für die Reflexion des Infrarotlichtes ist hierbei im Wesentlichen die dünne Schicht aus Silber verantwortlich.

Eine weitere Beschichtung, die für sichtbares Licht durchlässig und für Infrarotlicht reflektierend ist, ist aus der WO 95/29883 bekannt. Diese Beschichtung befindet sich auf einem Glassubstrat und besteht ebenfalls aus wenigstens fünf Schichten. Auf diesem Glassubstrat befindet sich als erste Schicht ein Oxid, z. B. Zinkoxid, Zinnoxid, Indiumoxid etc. Die zweite Schicht wird durch einen Silberfilm gebildet, während die dritte Schicht eine Metallschicht ist, welche die darunter liegende Silberschicht während eines Sputterprozesses schützt. Hierauf folgt eine weitere Metalloxid-Schicht, die verhindert, dass die Silberschicht oxidiert. Die fünfte und letzte Schicht bildet eine Siliziumnitrid-Schicht.

Ferner ist ein thermisch isolierendes Schichtsystem bekannt, das sich für gekrümmte Scheiben eignet (DE 198 50 023 A1 = US 618 02 47 B1). Dieses Schichtsystem enthält wenigstens eine Schicht aus einem Edelmetall, die in Schutzschichten eingeschlossen ist. Im Einzelnen kann ein solches Schichtsystem bestehen aus TiO₂ - NiCrOₓ - TiO₂ - Ag - NiCrOₓ - Si₃N₄.

Eine Verbesserung der Wärmedämmung wurde bisher nur mittels komplizierter Doppelsilber- oder Splitsilber-Schichtsysteme erreicht.

Der Erfindung liegt die Aufgabe zugrunde, die Wärmedämmung einer Substratbeschichtung bei hoher Transmission des sichtbaren Lichts zu verbessern, ohne die Dicke einer der die Wärmestrahlung reflektierenden Schicht zu erhöhen.

Diese Aufgabe wird gemäß den Merkmalen des Patenanspruches 1 gelöst.

Die Erfindung betrifft eine Glasbeschichtung und eine Verfahren zur Herstellung dieser Glasbeschichtung. Die Glasbeschichtung weist eine erste Schicht aus ZnO und eine darauf angeordnete zweite Schicht aus Ag auf. Bevor die Ag-Schicht auf die ZnO-Schicht aufgebracht wird, wird sie mit Ionen bestrahlt.

Der mit der Erfindung erzielte Vorteil besteht insbesondere darin, dass durch eine spezielle Vorbehandlung derjenigen Schicht, auf welcher die Silberschicht aufgebracht wird, das Aufwachsen der die Wärmestrahlung reflektierenden Schicht derart beeinflusst wird, dass sich ihr Flächenwiderstand um bis zu 20 % verringert, ohne mehr Material aufbringen zu müssen. Die die Wärmestrahlung reflektierende Schicht ist hierbei vorzugsweise Silber und die Schicht, auf der das Silber aufgebracht wird, ist vorzugsweise ZnO. Die Vorbehandlung dieses ZnO erfolgt vorzugsweise durch Ionenbeschuss.

Dem Silber können in geringen Mengen - weniger als 10 Gewichtsprozent - Cu, Al, Nd, In, Yt, Sb, V und dergleichen beigemischt sein. Alternativen zum ZnO bzw. ZnO:Al für die Aufwachsschicht sind z. B. NiCr, NiCrOₓ, TiOₓ, TiO₂, W, WO, WOₓ, Zr, ZrOₓ, ZrO.

Im Vergleich zu Doppelsilber - bzw. Splitsilber Low-E-Schichtsystemen, ermöglicht die Erfindung eine schnellere Produktion, weil weniger Einzelschichten und weniger komplizierte Prozesse erforderlich sind. Die Produktion ist auch kostengünstiger, weil weniger Targetmaterial und weniger Kathoden benötigt werden. Die Beschichtungsanlagen können insgesamt kleiner ausgelegt werden. Aufgrund des einfachen Schichtsystems ergibt sich weniger Ausschuss, weniger Wartungsaufwand und weniger Verbrauchsmaterial. Im Vergleich zu Einfachsilber-Low-E-Schichtsystemen weisen die gemäß der Erfindung hergestellten Produkte eine bessere Funktionalität auf. Bei einem getemperten Schichtsystem wird der Flächenwiderstand um bis zu 15 % abgesenkt. Damit sind Emissivitäten ε < 0,040 möglich, und zwar bei einer Transmission von über 88 %.

Ein Ausführungsbeispiel der Erfindung ist in den Zeichnungen dargestellt und wird im Folgenden näher beschrieben. Es zeigen:
- Fig. 1: eine schematische Darstellung einer Beschichtungsanlage;
- Fig. 2: einen Schichtaufbau auf einem Substrat.

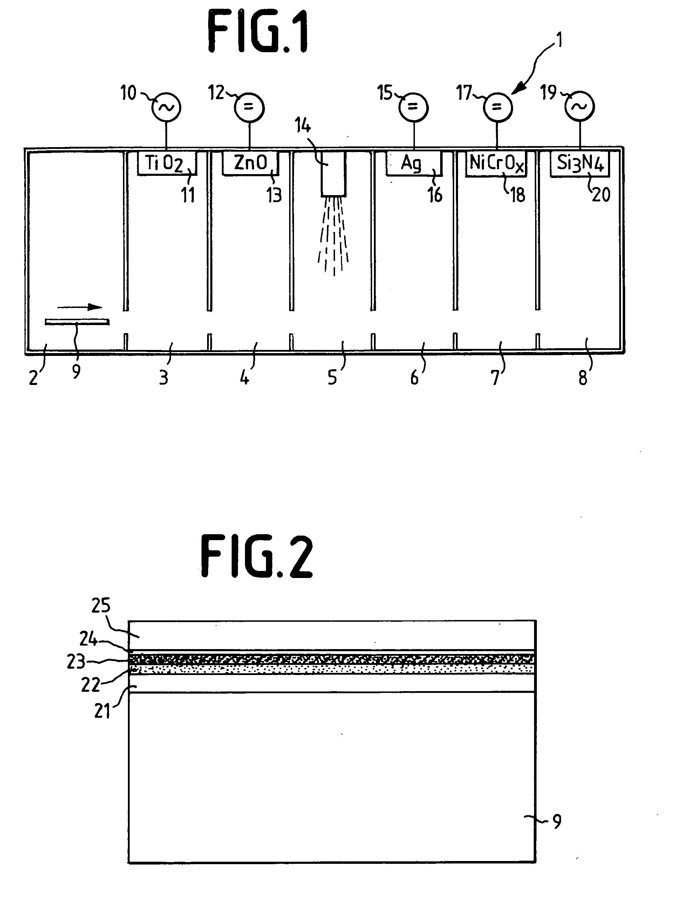

In der Fig. 1 ist eine Beschichtungsanlage 1 schematisch dargestellt. Diese Beschichtungsanlage 1 weist eine Einschleuskammer 2, eine erste Beschichtungskammer 3, eine zweite Beschichtungskammer 4, eine Bearbeitungskammer 5, eine dritte Beschichtungskammer 6, eine vierte Beschichtungskammer 7 und eine fünfte Beschichtungskammer 8 auf.

Ein Substrat 9 gelangt mittels eines nicht dargestellten Transportmittels von der Einschleuskammer 2 in die erste Beschichtungskammer 3, in der TiO₂ mittels einer Wechselstromquelle 10 gesputtert wird. Es könnten hier auch keramische TiOₓ mittels DC gesputtert werden. Das entsprechende TiO₂-Target ist mit der Bezugszahl 11 versehen. Nachdem das Substrat 9, bei dem es sich um eine Glasscheibe handeln kann, mit einer TiO₂-Schicht versehen wurde, gelangt das Substrat 9 in die zweite Beschichtungskammer 4, wo mit Hilfe einer Gleichstromquelle 12 ein ZnO-Target 13 gesputtert wird. Sobald sich die erforderliche ZnO-Schicht auf der TiO₂-Schicht abgelagert hat, gelangt das Substrat 9 in die Bearbeitungskammer 5. Dort befindet sich eine Ionen-Quelle 14, welche die ZnO-Schicht des Substrates 9 mit Ionen beschießt. Im Anschluss hieran gelangt das Substrat in die dritte Beschichtungskammer 6, wo mittels einer Gleichstromquelle 15 ein Silbertarget 16 gesputtert wird.

Die ZnO-Schicht unterhalb des Silbers dient als Unterblocker und hat einen großen Einfluss auf die Eigenschaften der Silberschicht. Sie senkt beispielsweise den Schichtwiderstand des Silbers ab, was einer verbesserten elektrischen Leitfähigkeit entspricht. Hierdurch wird die Fähigkeit des Silbers, infrarotes Licht zu reflektieren, verbessert, denn die Emissivität korreliert direkt mit dem Flächenwiderstand des Schichtsystems. Je geringer der Flächenwiderstand, umso besser ist die Wärmedämmung einer Beschichtung.

Die bekannte Herabsetzung des Flächenwiderstandes von Silber durch eine unterlagerte ZnO-Schicht wird erfindungsgemäß noch einmal dadurch verbessert, dass die ZnO-Schicht mit Ionenstrahlen bestrahlt wird. Damit wird die Emissivität der Silberschicht bei gleich hoher Transmission für die Wellenlängen im sichtbaren Bereich verbessert.

Die Modifikation der ZnO-Oberfläche durch die Ionen beeinflusst das Aufwachsen der nachfolgenden Silberschicht massiv. Der Flächenwiderstand des Silbers wird um bis zu 20 % verringert, ohne mehr Silber aufbringen zu müssen.

Bei den Ionen der Ionenstrahlquelle 14 kann es sich um Argon- und/oder Sauerstoff-Ionen handeln. Die Eindringtiefe der Ionen darf nicht zu groß sein, damit die unter der ZnO-Schicht liegende Schicht nicht getroffen wird. Deshalb sind auch andere Strahlungsarten, z. B. Elektronen- oder Röntgenstrahlen, für die Behandlung des ZnO ungeeignet.

Die Dosis der Ionen kann entweder über eine Einstellung des Gasflusses der Ionenstrahlquelle 14 oder über die Variation der Transportgeschwindigkeit des Substrates 9 unter der Ionenstrahlquelle 14 verändert werden. Die Energie, mit denen die Ionen auf der ZnO-Schicht auftreffen, wird durch die Beschleunigungsspannung eingestellt.

Insbesondere über die Einstellung der Energie kann die Oberflächenmorphologie der ZnO-Schicht verändert werden. So wird die Rauigkeit verändert und die Dichte kann beeinflusst werden. Außerdem kann die Oberfläche chemisch aktiviert oder passiviert werden. In geringem Maß ist es auch möglich, Argon und/oder Sauerstoffatome in die Oberfläche der ZnO-Schicht einzubauen.

Im Einzelnen wird ein Ionenstrom auf die Schichtoberfläche beschleunigt, der z. B. konstant ist und durch die Gasart und ihre Menge (z. B. 35 sccm Ar), die Beschleunigungsspannung (z. B. U = 1 kV bis U = 3 kV), den Strom (I = 0,5 A) und den Abstand von der Ionenquelle zum Substrat (130 mm) festgelegt wird. "sccm" bedeutet "(60 mbar * ℓ)/sec", wobei ℓ die Bezeichnung für Liter ist.

Es werden also die Gasart, die Gasmenge pro Zeit und die Beschleunigungsspannung eingestellt. Der Strom, den eine Stromquelle abgibt, ergibt sich aus diesen Vorgaben. Der geometrische Abstand zwischen dem Substrat 9 und der Ionenquelle 14 bleibt immer konstant.

Strom und Spannung der Stromquelle werden durch Messgeräte erfasst. Die tatsächliche Energie des Ionenstroms kann nicht gemessen werden.

Die Geschwindigkeit des Substrats 9 legt die mittlere Zeit pro Flächenelement fest, in welcher der Ionenstrahl das Substrat 9 trifft. Da die mittlere Eindringtiefe der Ionen unbekannt ist, kann nicht auf ein Volumenelement umgerechnet werden. Auf die Wirkung im Volumen kommt es aber auch gar nicht an. Entscheidend ist die Wirkung auf die Oberfläche. Die Oberflächenrauigkeit hat offenbar einen unmittelbaren Einfluss auf die Emissivität der Low-E-Beschichtung.

Bleibt der Ionenstrom konstant und wird die Geschwindigkeit halbiert, so treffen im Mittel doppelt so viele Ionen mit der jeweils gleichen mittleren Energie auf das gleiche Flächenelement. Die Ionendosis wird somit verdoppelt. Damit wird auch der Energieeintrag auf die Probe verdoppelt. Wird die Beschleunigungsspannung verdreifacht, wird auch die mittlere Ionenenergie in erster Näherung verdreifacht.

Somit ergibt sich die Energie als Produkt der Beschleunigungsspannung mit dem Kehrwert der Substratgeschwindigkeit.

Nachdem die Silberschicht auf die behandelte ZnO-Schicht aufgesputtert wurde, gelangt das Substrat in die Beschichtungskammer 7, wo mittels einer Gleichstromquelle 17 ein NiCrOₓ- Target gesputtert wird. Anschließend wird in der Beschichtungskammer 8 mittels einer Wechselstromquelle 19 ein Si₃N₄-Target 20 gesputtert.

Das vollständig beschichtete Substrat 9 ist in der Fig. 2 dargestellt. Man erkennt hierbei eine relativ dicke TiO₂-Schicht 21, auf der sich eine relativ dünne ZnO-Schicht 22 befindet. Auf dieser bearbeiteten ZnO-Schicht 22 befindet sich eine relativ dünne Ag-Schicht 23. Hierauf ist eine sehr dünne NiCrOₓ-Schicht 24 aufgebracht. Den Abschluss bildet eine relativ dicke Si₃N₄-Schicht 25.

Obgleich in der Fig. 2 fünf verschiedene Schichten 21-25 dargestellt sind, kommt es bei der Erfindung im Wesentlichen nur auf die Schichten 22 und 23 an. Es wurden deshalb Versuche mit einem Zweischichtsystem Glas - ZnO - Ag durchgeführt, deren Ergebnis in der nachfolgenden Tabelle wiedergegeben ist. Die Schichtdicke des Silbers war bei allen Versuchen exakt gleich und lag bei ungefähr 7,6 nm.

**Tabelle 1**

| Versuchs- Serie | Gas | U (Ion) kVolt | Ar-flow [sccm] | V (Ion) [m/min] | Dosis [a. u.] | Energie [a. u.] | R/sq [Ohm] bei 7,6 nm Ag | Diff. zu Ref. |
|---|---|---|---|---|---|---|---|---|
| **Ref** | | | | | | | **10,8** | |
| Ion7 | Ar | 3 | 41 | 1,0 | 41 | 123 | 8,3 | 24 % |
| Ion1 | Ar | 3 | 41 | 2,0 | 21 | 62 | 8,5 | 21 % |
| Ion3 | Ar | 3 | 20 | 1,0 | 20 | 60 | 8,4 | 22 % |
| Ion2 | Ar | 3 | 20 | 2,0 | 10 | 30 | 9,9 | 8 % |
| Ion6 | Ar | 1 | 41 | 0,5 | 82 | 82 | 7,9 | 27 % |
| Ion5 | Ar | 1 | 41 | 1,0 | 41 | 41 | 8,8 | 19 % |
| Ion4 | Ar | 1 | 41 | 2,0 | 21 | 21 | 9,9 | 9 % |

Dosis und Energie sind hierbei in "arbitrary units" anngegeben. Zur Vereinfachung wurden alle Werte auf einen Referenzversuch mit der Energie 1 normiert. Die SI-Einheiten der Dosis in Coulomb je Kilogramm und die SI-Einheit der Energie in Newtonmeter wurden nicht ermittelt. Ion 7, Ion 1 etc. weisen auf die Reihenfolge der durchgeführten Versuche hin. R sq ist der Flächenwiderstand.

Das verwendete Gas war bei allen sieben Versuchen Argon. Die Beschleunigungsspannung lag bei 1 oder 3 k Volt, während der Gasfluss entweder 20 oder 41 sccm betrug. Die Geschwindigkeit V(Ion), mit der das Substrat 9 bewegt wurde, lag zwischen ein und zwei Metern pro Minute. Die Ionen-Dosis betrug zwischen 10 und 82 Einheiten, und die kinetische Energie lag zwischen 21 und 123 Einheiten.

Während der Flächenwiderstand der Silberschicht bei unbehandeltem ZnO bei 10,8 Ohm lag, fiel der Flächenwiderstand bei behandeltem ZnO um wenigstens 8 % bis zu 27 % ab.

Es wurden auch Versuche mit einer Beschichtung mit fünf Lagen unternommen. Das Ergebnis dieser Versuche bezüglich der Farbwerte und des Flächenwiderstands ist in der Tabelle 2 dargestellt.

**Tabelle 2**

| Schichtfolge | Referenz | Probe 1 | Probe 2 |
|---|---|---|---|
| Glas | 4 mm | 4 mm | 4 mm |
| TiO2 (nm) | 23,0 | 23,0 | 23,0 |
| ZnO (nm) | 15,0 | 15,0 | 15,0 |
| IONEN | ohne | Typ 1 | Typ 2 |
| Ag (nm) | 9,2 | 9,2 | 9,2 |
| NiCrOx (nm) | 4,0 | 4,0 | 4,0 |
| Si3N4 (nm) | 35,0 | 35,0 | 35,0 |

| Daten vor dem Tempern | | | |
|---|---|---|---|
| Ty | 85,75 | 85,65 | 85,24 |
| a* | -0,90 | -0,53 | -0,52 |
| b* | -0,85 | -0,32 | -0,53 |
| RGy | 5,76 | 5,96 | 5,86 |
| a* | -2,78 | -5,19 | -5,17 |
| b* | 3,50 | 1,89 | 1,70 |
| RFy | 6,42 | 6,11 | 6,35 |
| a* | -3,20 | -5,43 | -5,31 |
| b* | 8,09 | 5,58 | 5,13 |
| Haze | 0,09 | 0,09 | 0,1 |
| **R/sq** | **6,2** | **5,4** | **5,7** |

| | | | |
|---|---|---|---|
| Herbei bedeuten gemäß CIE LAB DIN 6174 (1976): Ty = die im sichtbaren Bereich gemittelte Transmission in Prozent a* = Farbwert auf der Rot-Grün-Achse b* = Farbwert auf der Gelb-Blau-Achse RGy = die im sichtbaren Bereich gemittelte Reflexion von der Glasseite der Probe in Prozent RFy = die im sichtbarenn Bereich gemittelte Reflexion von der Schichtseite der Probe in Prozent Haze = Trübung | | | |

Die vorstehenden Daten beziehen sich auf das beschichtete Substrat vor dem Tempern. Man erkennt hieraus, dass der Schichtwiderstand bei einer Ionenbehandlung gegenüber einer Nicht-Ionenbehandlung wesentlich sinkt.

Mit Typ 1, Typ 2, Typ 3 sind Ionenenergien gemeint, wobei Typ 1 eine höhere, Typ 2 eine mittlere und Typ 3 eine niedrige Energie bezeichnet.

Nach dem Tempern ergaben sich Werte, die in der nachfolgenden Tabelle 3 wiedergegeben sind.

**Tabelle 3**

| Schichtfolge | Referenz | Probe 1 | Probe 2 |
|---|---|---|---|
| Glas | 4 mm | 4 mm | 4 mm |
| TiO2 (nm) | 23,0 | 23,0 | 23,0 |
| ZnO (nm) | 15,0 | 15,0 | 15,0 |
| IONEN | ohne | Typ 1 | Typ 2 |
| Ag (nm) | 9,2 | 9,2 | 9,2 |
| NiCrOx (nm) | 4,0 | 4,0 | 4,0 |
| Si3N4 (nm) | 35,0 | 35,0 | 35,0 |

| Daten nach dem Tempern | | | |
|---|---|---|---|
| Ty | 85,62 | 86,97 | 86,73 |
| a* | -0,42 | -0,35 | -0,27 |
| b* | -1,52 | -0,68 | -0,86 |
| RGy | 5,54 | 5,82 | 5,73 |
| a* | -1,71 | -3,46 | -3,64 |
| b* | 2,51 | 1,61 | 1,11 |
| RFy | 6,09 | 6,06 | 5,84 |
| a* | -2,15 | -3,15 | -3,57 |
| b* | 7,35 | 3,66 | 4,31 |
| Haze | 0,28 | 0,30 | 0,28 |
| **R/sq** | **5,2** | **4,5** | **4,8** |

Es ist in allen Fällen nach der Behandlung der ZnO-Schicht mit Ionen eine Erniedrigung des Schichtwiderstandes festzustellen. Die leichten Farbabweichungen in den Reflexionsfarben sind auf die veränderte Schichtdicke des ZnO zurückzuführen.

Auch die Resultate der in der nachfolgenden Tabelle 4 wiedergegebenen Versuchsreihe bestätigen, dass sowohl die Transmission als auch der Flächenwiderstand durch die Ionenbehandlung der ZnO-Schicht verbessert werden.

**Tabelle 4**

| Schichtfolge | Probe 3 | Referenz |
|---|---|---|
| Glas | 4 mm | 4 mm |
| TiO2 (nm) | 23,0 | 23,0 |
| ZnO (nm) | 15,0 | 15,0 |
| IONEN | Typ 3 | ohne |
| Ag (nm) | 12,0 | 12,0 |
| NiCrOx (nm) | 5,0 | 5,0 |
| Si3N4 (nm) | 40,0 | 40,0 |
| 02 bei Ag | 3 sccm | 3 sccm |

| getemperte Proben | | |
|---|---|---|
| Ty | 88,62 | 86,02 |
| a* | -2,05 | -1,24 |
| b* | 1,95 | 1,75 |
| RGy | 5,07 | 6,02 |
| a^{*} | 4,52 | 3,23 |
| b^{*} | -11,66 | -12,02 |
| RFy | 4,29 | 4,72 |
| a* | 6,79 | 5,87 |
| b^{*} | -10,49 | -11,05 |
| Haze | 0,24 | 0,35 |
| **R/sq** | **3,1** | **3,4** |

Es versteht sich, dass die Erfindung nicht auf die beschriebenen Ausführungsbeispiele beschränkt ist. So können beispielsweise statt der angegebenen Oxide auch Metalle reaktiv gesputtert werden, die erst durch Sauerstoffzufuhr Oxide bilden.

## Patentansprüche

1. Glasbeschichtung, die im Wesentlichen transparent für sichtbares Licht ist und wenigstens eine Infrarotstrahlung reflektierende Schicht aufweist, wobei diese Infrarotstrahlen reflektierende Schicht auf einer weiteren Schicht aufliegt, **dadurch gekennzeichnet, dass** die weitere Schicht eine durch Ionenbestrahlung behandelte Schicht ist.

2. Glasbeschichtung nach Anspruch 1, **dadurch gekennzeichnet, dass** die Infrarotstrahlen reflektierende Schicht aus einem Material mit wenigstens 50 % Silberanteil besteht.

3. Glasbeschichtung nach Anspruch 2, **dadurch gekennzeichnet, dass** die Infrarotstrahlen reflektierende Schicht aus reinem Silber besteht.

4. Glasbeschichtung nach Anspruch 1, **dadurch gekennzeichnet, dass** die durch Ionenbestrahlung behandelte Schicht aus einem Material mit wenigstens 50 % ZnO-Anteil besteht.

5. Glasbeschichtung nach Anspruch 4, **dadurch gekennzeichnet, dass** die durch Ionenbestrahlung behandelte Schicht aus reinem ZnO besteht.

6. Glasbeschichtung nach Anspruch 1, **dadurch gekennzeichnet, dass** die durch Ionenbestrahlung behandelte Schicht aus ZnOₓ oder ZnO:Al oder Zn:AlOₓ besteht.

7. Glasbeschichtung nach Anspruch 1, **dadurch gekennzeichnet, dass** die Ionenbestrahlung aus Ar-Ionen besteht.

8. Glasbeschichtung nach Anspruch 1, **dadurch gekennzeichnet, dass** die Ionenbestrahlung aus Sauerstoff-Ionen besteht.

9. Glasbeschichtung nach Anspruch 1, **dadurch gekennzeichnet, dass** die Ionenbestrahlung aus einem Gemisch aus O₂ und Ar besteht.

10. Verfahren zur Herstellung einer Beschichtung auf einem Substrat, **gekennzeichnet durch** folgende Schritte:
a) es wird eine erste Schicht auf das Substrat aufgetragen;
b) die erste Schicht wird mittels Ionenbestrahlung bearbeitet;
c) auf der ersten Schicht wird eine zweite Schicht aufgebracht, wobei diese zweite Schicht Infrarotstrahlung reflektiert.

11. Verfahren nach Anspruch 10, **dadurch gekennzeichnet, dass** die erste Schicht überwiegend eine ZnO-Schicht ist, die durch Sputtern aufgebracht wird.

12. Verfahren nach Anspruch 10, **dadurch gekennzeichnet, dass** die zweite Schicht überwiegend eine Ag-Schicht ist, die durch Sputtern aufgebracht wird.

13. Glasbeschichtung, **gekennzeichnet durch** die Schichtfolge Glas - TiO₂ - mit Ionenbestrahlung bearbeitetes ZnO - Ag - NiCrOₓ - Si₃N₄.

14. Verfahren zur Herstellung einer Glasbeschichtung, **gekennzeichnet durch** folgende Schritte:
a) Auftragen einer TiO2-Schicht auf das Glas mittels Sputtern;
b) Auftragen einer ZnO-Schicht auf die TiO₂-Schicht mittels Sputtern;
c) Bearbeiten einer ZnO-Schicht mittels Ionenbestrahlung;
d) Auftragen einer Ag-Schicht auf der ZnO-Schicht mittels Sputtern;
e) Auftragen einer NiCrOₓ-Schicht auf der Ag-Schicht mittels Sputtern;
f) Auftragen einer Si₃N₄-Schicht auf der NiCrOₓ-Schicht mittels Sputtern.
